# EUROPÄISCHE PATENTSCHRIFT

(11) **EP 2 447 036 B1**
(45) Veröffentlichungstag und Bekanntmachung des Hinweises auf die Patenterteilung: **31.10.2018**
(21) Anmeldenummer: 11173268.1
(22) Anmeldetag: 08.07.2011
(51) Int. Cl.: B29C 45/76, B29K 67/00, B29K 105/26, G01N 11/08, G01N 33/44, B29B 13/00, B29B 17/00, B29C 31/00, B29C 31/08, B29C 49/06, B65B 3/02

(54) **Anlage und Verfahren zur kontinuierlichen Herstellung von Preforms**
Method and assembly for continuous manufacturing of preforms
Installation et procédé de fabrication continue de préformes

(30) Priorität: 26.10.2010 DE 102010042958
(43) Veröffentlichungstag der Anmeldung: 02.05.2012
(60) Teilanmeldung: 18167769.1
(73) Patentinhaber: Krones AG, 93073 Neutraubling (DE)
(72) Erfinder: Forsthövel, Jochen, 93073 Neutraubling (DE)
(74) Vertreter: Grünecker Patent- und Rechtsanwälte PartG mbB

(56) Entgegenhaltungen:
- EP-A1- 2 110 224
- WO-A1-96/18541
- WO-A1-2004/073953
- WO-A1-2007/131803
- WO-A1-2009/100473
- WO-A1-2009/150481
- DE-A1- 19 528 695
- DE-A1- 19 934 349
- GHITA O R ET AL: "An in-line near-infrared process control tool for monitoring the effects of speed, temperature, and polymer colour in injection moulding", POLYMER TESTING, ELSEVIER, Bd. 27, Nr. 4, 1. Juni 2008 (2008-06-01), Seiten 459-469, XP022664568, ISSN: 0142-9418, DOI: 10.1016/J.POLYMERTESTING.2008.01.010 [gefunden am 2008-02-15]
- DUMITRESCU O R ET AL: "Near infrared spectroscopy for in-line monitoring during injection moulding", POLYMER TESTING, ELSEVIER, Bd. 24, Nr. 3, 1. Mai 2005 (2005-05-01), Seiten 367-375, XP004751829, ISSN: 0142-9418, DOI: 10.1016/J.POLYMERTESTING.2004.10.003
- "NPE 2006", PLASTICS ADDITIVES AND COMPOUNDING, ELSEVIER SCIENCE, OXOFRD, GB, Bd. 8, Nr. 3, 1. Mai 2006 (2006-05-01), Seiten 22,24-41, XP025228065, ISSN: 1464-391X [gefunden am 2006-05-01]
- Eker, Fuat: "In-Line Color Measurement Directly in the Melt", Kunststoffe International, PE110032, April 2009 (2009-04), Seiten 35-37, XP002666365, Gefunden im Internet: URL:http://www.pausch.com/pdf/F-Eker_In-Li ne_Color_Measurement_Kunststoffe_04_09.pdf [gefunden am 2011-12-23]

## Beschreibung

Die Erfindung betrifft eine Anlage gemäß Oberbegriff des Patentanspruchs 1 sowie ein Verfahren gemäß Oberbegriff des Patentanspruchs 9.

Wird der Prozessablauf nach der Schmelzebildung zur Messung und Auswertung von Qualitätsparametern der Schmelze unterbrochen, dann wird aus dem Recyclingprozess vorhandene Wärme vergeudet und ist erhöhter logistischer Aufwand notwendig. Ein zu hoher Acetaldehydgehalt der Schmelze, beispielsweise verursacht durch eine zu starke Scherung und zu hohe Temperatur während des Recyclingprozesses, kann zur geschmacklichen Beeinträchtigung bei geschmacksarmen Nahrungsmitteln wie stillen Wässern führen, wenn diese in die aus den Preforms hergestellten Kunststoffbehälter eingefüllt werden. Da die Qualität chargenweise in den Recyclingprozess eingebrachten Kunststoffmaterials, insbesondere PET-Flakes, naturgemäß fluktuiert muss zum Einhalten eines vorbestimmten Qualitätsstandards der Schmelze der Prozessablauf bis zum Austritt der Schmelze geregelt werden. Hierzu ist es üblich, Proben der Schmelze oder des Rezyklats zu nehmen und in Labortests zu untersuchen, beispielsweise um zur Regelung des Prozessablaufes Messresultate zum Acetaldehydgehalt und/oder zur intrinsischen Viskosität und/oder der Farbe und/oder den Gehalt anderer Kontaminanten der Schmelze bzw. des Rezyklats zu erhalten. Eine solche Anlage zum Herstellen der Schmelze unter Verwendung eines Rezyklats wird beispielsweise in DE 10 2005 013 701 A1 offenbart. Ein unterbrechungsbehafteter Zwischenschritt zur Messung und Auswertung von Qualitätsparametern der Schmelze bedeutet eine akute Schwachstelle im Prozessablauf, auf die der Anlagenhersteller keinen Einfluss hat, der die Anlage so konzipiert hat, dass die nachfolgende Befüllung mit Nahrungsmitteln unter den bestimmten Qualitätsstandards für das jeweilige Nahrungsmittel erfolgt. So werden beispielsweise bei der üblichen Vorgangsweise mit Probenahme, Messung der Probe und Auswertung der Messresultate einen vorbestimmten Toleranzbereich verlassende Auswertungsresultate zum Anlass genommen, den Stromauf-Prozessablauf korrigierend zu verändern, gegebenenfalls zunächst weiterhin gebildete Schmelze zu verwerfen oder aus weiterhin gebildeter Schmelze hergestellte Preforms auszusondern oder als B-Qualität zu identifizieren und für weniger delikate Nahrungsmittel oder andere Zwecke einzusetzen, oder hergestellte Kunststoffbehälter vor der Befüllung grundsätzlich zu inspizieren und kontrollieren, um nicht zulässige Kombinationen von Kunststoffbehältern minderer Qualität mit bestimmten Nahrungsmitteln ausschließen zu können. Der logistische Aufwand hierfür ist hoch. Damit verbundene Unterbrechungen sind kostenintensiv. Zumindest vom Anlagenhersteller wird unter anderem aus diesen Gründen angestrebt, Anlagensektionen miteinander zu verblocken, um durch eine Trennung bedingte Fehlerquellen zu eliminieren, was jedoch bisher deshalb nicht möglich war, weil eine Verblockung mangels Zugriffsmöglichkeiten das Beherrschen unvermeidbarer Qualitätsparameterfluktuationen verwehrt.

Bei einer solchen, aus WO 2009/150481 A bekannten Anlage werden an einem Vakuum-Extruder bei einer außenseitigen Öffnung des Extrusions-Werkzeugs während der Extrusion in der zum Formwerkzeug gelieferten Schmelze produzierte Dämpfe mit einem Abzugssystem abgezogen und gesammelt. Die Dämpfe enthalten Acetaldehyd oder flüchtige Substanzen und werden mit einem Gaschromatensystem analysiert. Das Analyseresultat liegt nach etwa 3-5 Minuten vor, und kann von der Anlagenprozesssteuerung zum Beeinflussen von Prozessvariablen, wie Temperatur und Einspritzdrücken, verwertet werden.

In einer aus WO 2009/100473 A bekannten Anlage sind ein Reaktor oder Schneidverdichter und eine Spritzgießvorrichtung verblockt. Im Reaktor erfolgt jedoch kein Aufschmelzen, d.h., es wird keine Schmelze gebildet. Im Übergang vom Reaktor zu der Spritzgießvorrichtung wird kein Qualitätsparameter des bearbeiteten Materials gemessen, und wird keine Schmelzeaussonderungsstrategie abgeleitet.

Bei einer aus WO 2009/150481 A bekannten Anlage befindet sich die Schnittstelle, an der mit einem Gaschromatographen die Acetaldehyd-Konzentration gemessen und ausgewertet wird, stromab der Formen der Sprießgießmaschine, so dass an dieser Schnittstelle die Acetaldehyd-Konzentration nur im fertigen Preform ermittelt wird. Die durch die Messung erst nach mehreren Minuten erhaltene Information ist eine überwachte Prozessvariable für die Steuerung, damit Temperatur oder Drücke verzögert regelbar sind, um in den Preforms eine konstantere Acetaldehyd-Konzentration zu erzielen.

Aus WO 2007/131803 A wird auf eine Zuführung der Schmelze zur Spritzgießmaschine hingewiesen. Eine direkte Verblockung zwischen dem Schmelze abgebenden DHI-Reaktor und der Spritzgießmaschine ist jedoch nicht offenbart. Um im Rahmen einer Prozessänderungsstrategie die Schmelzeherstellung zu regeln, wird ausgangs des aus Rezyklat Schmelze erzeugenden Schmelzebildners und stromab von Schmelzefiltern die intrinsische Viskosität gemessen und ausgewertet. Auch stromab weiterer Reaktoren können Messvorrichtungen eingesetzt werden, um vorgegebene Qualitätsansprüche zu prüfen, wie ein Online-Viskosimeter.

Aus einem Artikel Ghita O.R. et.al.:"An in-line near-infrared process control tool for monitoring the effects of speed, temperature, and polymer colour in injection moulding", Polymer Testing, Elsevier, Bd. 27, Nr. 4, 1. Juni 2008, Seiten 459-469, XP022664568, ISSN: 0142-9418, DOI: 10.1016/J.Polymertesting.2008.01.010" ist es bekannt, in der Düse einer Spritzgießmaschine einen Inline-Messsensor mit Glasfaserkabeln vorzusehen, um die Farbe der Schmelze bei unterschiedlichen Temperaturen und/oder Spritzgeschwindigkeiten zu überwachen. Die bei der Messung gewonnene Information wird zum Regeln von Prozessvariablen genutzt.

In DE 10 2010 002 054.0 mit älterem Zeitrang werden bereits ein Verfahren und eine Anlage zum Herstellen von Behälter-Preforms vorgeschlagen, bei denen in einer Anlage eine Recyclingmaschine mit einer Preformmaschine direkt oder über wenigstens einen Zwischenspeicher so verbunden ist, dass von einer Wärmebehandlung des Kunststoffmaterials in der Recyclingmaschine eingebrachter Wärme zumindest ein Großteil mit dem Kunststoffmaterial in die Preformmaschine transferierbar ist. Auf die Messung von Qualitätsparametern des hergestellten Kunststoffmaterials und/oder die Steuerung bzw. Regelung des Prozessablaufes unter Berücksichtigung von Qualitätsparametern wird dabei nicht eingegangen.

Der Erfindung liegt die Aufgabe zugrunde, eine Anlage und ein in der Anlage durchzuführendes Verfahren anzugeben, mit denen bei reduziertem logistischem Aufwand die Wärme aus dem Recyclingprozess besser nutzbar und dennoch unvermeidliche, exzessive Fluktuationen von Qualitätsparametern der Schmelze soweit problemlos beherrschbar sind, dass in aus den Preforms hergestellten Kunststoffbehältern stets der für das jeweilige, einzufüllende Nahrungsmittel erforderliche Qualitätsstandard einhaltbar ist.

Die gestellte Aufgabe wird mit den Merkmalen des Patentanspruchs 1 vorrichtungstechnisch und mit den Merkmalen des Patentanspruchs 9 verfahrenstechnisch gelöst.

Da in der Anlage zumindest die Stromauf-Anlagensektion, von der die plastifizierte Schmelze abgegeben wird, und die Spritzgieß-Anlagensektion, in der aus der Schmelze mit unterbrechungsfreiem Prozessablauf die Preforms hergestellt werden, miteinander verblockt sind, lässt sich die in der Schmelze enthaltene Wärme aus dem Recyclingprozess bei reduziertem logistischem Aufwand besser für die Preform-Herstellung nutzen, und ist die akute Fehlerquelle einer Trennung zwischen den Anlagensektionen beseitigt. Der Anlagenhersteller gewinnt damit auch Einfluss auf einen korrekten Ablauf im Übergang zwischen den miteinander verblockten Anlagensektionen. Die an der Schnittstelle vorgesehene Inline-Messstation mit Auswerteeinrichtung ermöglicht trotz der Verblockung die permanente oder intermittierende Messung und Auswertung zumindest eines signifikanten Qualitätsparameters der Schmelze während des Prozessablaufes, und schafft somit die Voraussetzung, Prozessänderungs- und/oder Preformqualifizierungs-Strategien abzuleiten, ohne den Prozessablauf notwendigerweise unterbrechen zu müssen. Mittels des Messresultats und des Auswertungsergebnisses lässt sich trotz der Verblockung sicherstellen, dass der mit einem Nahrungsmittel befüllte Kunststoffbehälter dem Qualitätsstandard für dieses Nahrungsmittel entspricht, weil entweder Schmelze minderer Qualität ausgesondert oder Preforms oder Behälter minderer Qualität als B-Qualität identifiziert und zur Verwertung mit speziellen Nahrungsmitteln gehindert oder der Betreiber zumindest gewarnt oder letztendlich die Anlage gestoppt werden kann, sofern die abgeleiteten und realisierten Strategien nicht zum Erfolg geführt haben sollten. Da die Inline-Messung und Auswertung und Überwachung des zumindest einen Qualitätsparameters der Schmelze es ermöglicht, durch Aussonderung mangelhafter Schmelze sicherzustellen, dass bei der späteren Befüllung mit dem Nahrungsmittel der erforderliche Qualitätsstandard des Kunststoffbehälters gegeben ist, braucht der Prozessablauf nicht insgesamt unterbrochen zu werden, da sichergestellt ist, dass nur zum jeweiligen Nahrungsmittel passende Kunststoffbehälter befüllt werden, und keine Kunststoffbehälter mit mangelhaftem Qualitätsstandard. Die Inline-Messstation mit der Auswerteeinrichtung zur Messung während des Prozessablaufs resultiert in Kombination mit der Verblockung der Anlagensektionen in einer leicht realisierbaren Sicherstellung des erforderlichen Qualitätsstandards, und bildet eine Basis, noch mehrere Anlagensektionen einschließlich eines Füllers und gegebenenfalls sogar einer Verpackungs-Anlagensektion zu einer Gesamtanlage zu kombinieren, mit der der Anlagenhersteller dem Anwender nicht nur eine problemlose Handhabung an die Hand gibt, sondern auch von vornherein den jeweils erforderlichen, gegebenenfalls hohen Qualitätsstandard entweder der Behälter oder der gefüllten Behälter sicherstellen kann.

Verfahrensgemäß ermöglicht die Messung und Auswertung zumindest eines signifikanten Qualitätsparameters der Schmelze während des unterbrechungsfreien Prozessablaufs trotz der an sich eine Probenahme der Schmelze verhindernden Verblockung von Anlagensektionen in einem Anlagenblock, um modernen Anforderungen an optimale Energienutzung und Qualitätssicherung gerecht zu werden. Der Anlagenblock bietet eine universelle Basis zur weiteren Verblockung mit Anlagensektionen, die Anwendern eine für einen automatischen Betriebsablauf mit hohem Qualitätsstandard geeignete Komplettanlage an die Hand gibt. Dabei wird bei positivem Auswertungsergebnis, vorzugsweise bei Herausfallen des Messresultats aus einem vorbestimmten Toleranzbereich, vorzugsweise bis zum Vorliegen eines wieder negativen Auswertungsergebnisses, die weiterhin gebildete Schmelze ausgesondert. Gegebenenfalls wird zumindest eine Anlagenbetriebswarnung generiert, um die exzessive Fluktuation des jeweiligen Qualitätsparameters kundzutun.

Um vorsorglich mit minderer Qualität hergestellte Preforms und/oder daraus hergestellte Kunststoffbehälter beseitigen zu können, kann die Auswerteeinrichtung auch verbunden sein mit einer Preform-Aussonderungseinrichtung oder/und einer Kunststoffbehälter-Aussonderungseinrichtung, und/oder einer Preformqualifizier-Einrichtung, um mit minderer Qualität qualifizierte Preforms und daraus hergestellte Behälter an einer Befüllung mit dem speziellen Nahrungsmittel zu behindern [Seite 4, Absatz 1].

Bei einer zweckmäßigen Ausführungsform der Anlage umfasst die Inline-Messstation wenigstens eine Unterbaugruppe zum Messen des Acetaldehydgehalts und/oder der intrinsischen Viskosität und/oder ausgewählter Kontaminanten und/oder der Farbe der Schmelze, vorzugsweise mindestens zwei Unterbaugruppen zum Messen des Acetaldehydgehalts und der intrinsischen Viskosität.

In einer zweckmäßigen Ausführungsform weist die Messstation wenigstens einen mit Inertgas gespülten, von der Schmelze durchsetzten Raum auf, und ist in wenigstens einem Abgasströmungsweg aus dem Raum wenigstens ein Gaschromatograph angeordnet. Der Gaschromatograph misst beispielsweise den Acetaldehydgehalt in der Abgasströmung. Die Spülung mit dem Inertgas kann nur für Messzwecke durchgeführt werden, könnte aber auch gleichzeitig zum Reduzieren zumindest des Acetaldehydgehalts initiiert werden.

Bei einer anderen Ausführungsform wird die intrinsische Viskosität als ein Vergleichsmaß für die Molekülkettenlängen in der Schmelze mit einer Schmelze-Temperaturerfassung und einer Schmelze-Durchflussblende gemessen, über die eine ein Messresultat liefernde Druckdifferenz direkt im Schmelzestrom oder in einem Schmelze-Bypassstrom erzeugt wird.

Es kann zur Farbmessung eine Schmelze-Durchleuchtvorrichtung vorgesehen sein, wobei, vorzugsweise, durch die Schmelze transmittiertes Licht über wenigstens einen Lichtleiter nach außen übertragen und dort gemessen und mit einer Referenz verglichen wird.

In einer zweckmäßigen Ausführungsform ist die Messstation stromab einer Schmelze-Filtrationseinrichtung in der Stromauf-Anlagensektion platziert. Eine geeignete Stelle zur Platzierung der Messstation wäre beispielsweise ein Shooting-Pot und/oder ein Heißkanalverteiler der Spritzgieß-Anlagensektion, weil an dieser Stelle ein Übergang von einem Prozessschritt der Schmelzebildung zu einem anderen Prozessschritt der Preformherstellung stattfindet und dort gezielt eingegriffen werden kann.

Bei einer alternativen Ausführungsform weist die Spritzgieß-Anlagensektion eine Preform-Nachkühlstrecke mit Kühlhülsen auf und ist im Bereich der Nachkühlstrecke eine Farbmessstation angeordnet, vorzugsweise mit einer auf den Mündungsbereich jeder Preform in einer Kühlhülse gerichteten Beleuchtungsquelle.

Bei einer besonders zweckmäßigen Ausführungsform ist der Anlagenblock aus der mit dem Stromauf-Anlagensektion verblockten Spritzgieß-Anlagensektion zusätzlich mit einer Behälter-Blasform-Anlagensektion verblockt, mit der, vorzugsweise, zumindest eine Füller-Anlagensektion ebenfalls verblockt ist, so dass der gesamte Anlagenblock aus den miteinander verblockten Anlagensektionen einen kontinuierlichen Prozessablauf entweder bis zu den fertigen Kunststoffbehältern oder den sogar schon befüllten Kunststoffbehältern ermöglicht, wobei keine akute Fehlerstellen bildenden Unterbrechungen zwischen den Anlagensektionen mehr vorliegen. Dies liegt in dem von den Anlagenherstellern und Anwendern angestrebten Trend von Komplettanlagen mit automatischem Prozessablauf und hoher Qualität. Dabei ist es sogar möglich, in einer solchen Komplettanlage mit der Füller-Anlagensektion, z.B. über wenigstens einen Verschließer, eine Verpackungs-Anlagensektion zu verblocken, so dass der Anwender an der Ausstoßseite des Gesamtanlagenblocks das fertige verpackte Produkt erhält, für welches dank der Verblockung und der Messstation eine gleichbleibend hohe Endqualität gewährleistbar ist.

Alternativ oder additiv zur vorstehenden Lösung kann der Anlagenblock auch eine mit der Stromauf-Anlagensektion verblockte Dekontaminations-Anlagensektion, eine verblockte Aufbereitungs-Anlagensektion und eine verblockte Material-Aufgabe-Anlagensektion umfassen, so dass letztendlich ein Gesamtanlagenblock realisiert ist.

Bei einer in der Anlage durchführbaren Verfahrensvariante wird als wenigstens ein ausgewählter Schmelze-Kontaminant Acetaldehyd gemessen, und zwar über den Acetaldehydgehalt der Schmelze und mit einer gaschromatographischen Messung, vorzugsweise in einer Inertgas-Spülströmung, der die gebildete Schmelze ausgesetzt wird. Acetaldehyd sollte beispielsweise in einer Flaschenwand einer Flasche aus Polyethylenterephthalat weniger als 2 ppm, bevorzugt sogar weniger als 1 ppm betragen.

Bei einer anderen Verfahrensvariante wird die intrinsische Viskosität der Schmelze dadurch gemessen und ausgewertet, dass die Temperatur der Schmelze detektiert und die Schmelze durch eine Blende gepresst wird, über die eine Druckdifferenz entsteht, die als repräsentativ für die intrinsische Viskosität ausgewertet werden kann. Die intrinsische Viskosität steht in einem Verhältnis zur Molekülkettenlänge, welche wiederum für die Festigkeit und Formstabilität eines Kunststoffbehälters wesentlich ist.

Bei einer weiteren Verfahrensvariante wird die Schmelze durchleuchtet, um die Farbe zu messen. Dies ist beispielsweise mit Fotozellen mit Farbfiltern einfach durchführbar.

Der zumindest eine Qualitätsparameter der Schmelze wird während des Prozessablaufes entweder kontinuierlich gemessen und ausgewertet und zur Ableitung von Strategien verwendet, oder intermittierend in vorbestimmten Zeitabständen, um bei verringertem Messaufwand dennoch zeitgerecht einen Trend einer Abweichung des jeweiligen Qualitätsparameters festzustellen und Gegenmaßnahmen einleiten zu können.

Bei einer zweckmäßigen Verfahrensvariante wird beispielsweise nach Auswertung des Messresultats bei positivem Auswertungsergebnis, vorzugsweise bei Herausfallen des Messresultats aus einem vorbestimmten Toleranzbereich, eine Plastifizierungsdrehzahl eines Extruders geändert und/oder eine Zykluszeit im Extruder oder in anderen Prozessstufen und/oder eine Zudosierung beispielsweise eines Acetaldehyd-Blockers und/oder -Scavengers unter Regelung geändert.

Zweckmäßig wird ferner bei einer weiteren Verfahrensvariante dann die Anlage gestoppt, vorzugsweise automatisch über die Anlagenprozesssteuerung, falls ein positives Auswertungsergebnis über eine vorbestimmte Zeitdauer nicht mehr zum Verschwinden gebracht werden kann.

Bei einer besonders zweckmäßigen Verfahrensvariante wird der wenigstens eine Qualitätsparameter der Schmelze in einer Anlage gemessen und ausgewertet und zum Ableiten von Strategien benutzt, in welcher mit der Spritzgieß-Anlagensektion zumindest eine Behälter-Blasform-Anlagensektion und mit dieser eine Füller-Anlagensektion verknüpft sind, und, vorzugsweise, mit der Füller-Anlagensektion sogar eine Verpackungs-Anlagensektion, vorzugsweise über einen Verschließer, und/oder stromauf liegende Anlagensektionen mit der Stromauf-Anlagensektion verblockt sind, so dass der Benutzer das Verfahren mit vollautomatischem Prozessablauf in einem einzigen Anlagenblock oder einer Gesamtanlage durchzuführen vermag, und der Anlagenhersteller von vornherein sein Know-how und seine Sach- und Verfahrenskenntnis ohne nennenswerte Gefahr absichtlicher oder unabsichtlicher Fremdeinflüsse im späteren Prozessablauf implementieren konnte.

Anhand der Zeichnung werden Ausführungsformen des Erfindungsgegenstandes erläutert.

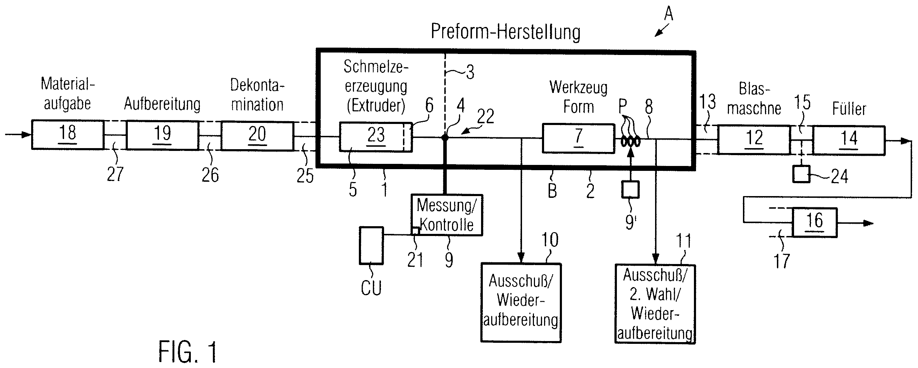

Fig. 1 ist eine Schemadarstellung einer Anlage, wobei in derselben Figur unterschiedliche Anlagenkonfigurationen angedeutet sind.

Fig. 1 verdeutlicht schematisch eine Anlage A zur kontinuierlichen Herstellung von Preforms P unter Verwendung von zumindest Polyester-Rezyklat, typischerweise PET-Flakes oder -Chips. Aus den hergestellten Preforms P werden Kunststoffbehälter blasgeformt, typischerweise PET-Flaschen, die für die Nahrungsmittel-Abfüllung bestimmt sind und mit einem Nahrungsmittel befüllt, verschlossen und zweckmäßig verpackt werden, wobei der jeweilige Kunststoffbehälter für das jeweilige Nahrungsmittel einen bestimmten Qualitätsstandard haben muss.

Kern der Anlage A ist in einer Ausführungsform ein Anlagenblock B, in welchem eine schmelzebildende Stromauf-Anlagensektion bei 3 mit einer Preform erzeugenden Spritzgieß-Anlagensektion 2 fest verblockt ist, wobei zwischen den verblockten Anlagensektionen 1, 2 an geeigneter Stelle eine innenliegende Schnittstelle 4 vorliegt. Die Stromauf-Anlagensektion 1 enthält mindestens einen die Schmelze erzeugenden Extruder 23, vorzugsweise mit einer endseitigen Schmelze-Filtrationseinrichtung 6 stromauf der Schnittstelle 4. Die Schnittstelle 4 ist beispielsweise im Bereich eines nicht näher hervorgehobenen Shooting-Pots und/oder eines Heißkanalverteilers der Spritzgieß-Anlagensektion 2 angeordnet, stromauf von Werkzeugen einer Spritzgießeinrichtung 7, aus der die Preforms P chargenweise oder kontinuierlich abgegeben und, beispielsweise, in nicht gezeigten Kühlhülsen entlang einer Nachkühlstrecke 8 gefördert werden.

An der Schnittstelle 4 ist mindestens eine integrierte Inline-Messstation 9 für zumindest einen Qualitätsparameter der Schmelze vorgesehen. Zur Messstation 9 gehört eine Auswerteeinrichtung 21 für das Messresultat der Messstation 9. Die Auswerteeinrichtung 21 ist beispielsweise mit einer Anlagenprozesssteuerung CU verbunden, oder in diese eingegliedert, mit der der Prozessablauf in der Anlage gesteuert, geregelt und kontrolliert wird.

Stromauf des Anlagenblocks B (gegebenenfalls in diesen integriert bzw. mit der Stromauf-Anlagensektion 1 verblockt) ist eine Materialaufgabe-Anlagensektion 18 vor einer Materialaufbereitungs-Anlagensektion 19 und einer Materialdekontaminations-Anlagensektion 20 angeordnet. Innerhalb des Anlagenblocks B ist zwischen der Schnittstelle 4 und der Preform-Spritzgießeinrichtung 7 eine Ausschuss/Wiederaufbereitungs-Einrichtung 10 für ausgesonderte Schmelze angeschlossen. Im Anlagenblock B kann ferner entweder in der Nachkühlstrecke 8 oder ausgangs des Anlagenblocks B eine Einrichtung zum Aussondern von hergestellten Preforms P oder zur Weiterverwertung dieser gegebenenfalls mit zweiter Wahl-Qualität hergestellten Preforms oder deren Wiederaufbereitung vorgesehen sein.

Alternativ ist bei 9' eine weitere Messstation beispielsweise der Farbe der frisch hergestellten Preforms P beispielsweise in der Nachkühlstrecke 8 angeordnet, die mit Durchleuchtung und Farbdioden und Farbfiltern arbeitet.

In der Messstation wird als zumindest ein Qualitätsparameter der Schmelze eine Messung vorgenommen, beispielsweise des Acetaldehydgehalts und/oder der intrinsischen Viskosität und/oder des Gehalts ausgewählter Kontaminanten und/oder der Farbe (letzteres alternativ oder additiv zu der Messstation 9'). Ausgewählte Kontaminanten könnten beispielsweise Oligomere, Limonen und dgl. sein.

Die Messung des Acetaldehydgehalts erfolgt beispielsweise so, dass die Messstation einen Raum im Anlagenblock B umfasst, der mit inertgas gespült wird, während ihn die Schmelze durchsetzt. In einem Abgasströmungsweg aus diesem Raum ist die Sonde eines Gaschromatographen platziert, der die Abgasströmung auf bestimmte Bestandteile überprüft. Die Inertgasspülung kann außerdem dazu dienen, u.a. den Acetaldehydgehalt zu reduzieren. Eine weitere Möglichkeit wäre die Anbringung eines sogenannten chemischen Sensors, der bei einer chemischen Reaktion am oder im Sensor das Vorhandensein von Acetaldehyd signalisiert.

Die Messung der intrinsischen Viskosität der Schmelze erfolgt über eine Temperaturerfassung und mittels einer über eine Blende erzeugten Druckdifferenz im Schmelzestrom, und zwar entweder im Schmelzehauptstrom oder einem Nebenstrom. Die Farbmessung der Schmelze wird beispielsweise über Durchleuchtung und Farbmessung des transmittierten Lichts durchgeführt, wobei das transmittierte Licht zur Auswertung, vorzugsweise, durch einen aus dem Raum der Messstation herausgeführten Lichtleiter weitergeleitet wird. Zweckmäßig werden zumindest der Acetaldehydgehalt und die intrinsische Viskosität in Kombination gemessen und ausgewertet, da eine zu hohe intrinsische Viskosität im Regelfall einen zu hohen Acetaldehydgehalt nach sich zieht.

Die Messung des mindestens einen Qualitätsparameters der in dem Anlagenblock B produzierten und direkt in der Spritzgieß-Anlagensektion 2 verarbeiteten Schmelze wird bezüglich des im Prozessablauf ermittelten Messresultats ausgewertet und beispielsweise mit Referenzwerten verglichen, vorzugsweise innerhalb eines vorbestimmten Toleranzbereiches. Bei Vorliegen eines positiven Auswertungsresultats, d.h., z.B. bei Herausfallen des Messresultats aus dem vorbestimmten Toleranzbereich, werden Prozessänderungs- und/oder Preform- bzw. Behälterqualifizierungs-Strategien abgeleitet, um sicherzustellen, dass bei der späteren Befüllung mit dem Nahrungsmittel der erforderliche Qualitätsstandard des Kunststoffbehälters gewährleistet ist. Prozessänderungsstrategien könnten beispielsweise bedeuten, dass bestimmte Prozessablaufparameter geändert oder geregelt werden, um den gemessenen Qualitätsparameter wieder in den Toleranzbereich zu bringen, beispielsweise bei exzessivem Anstieg des Acetaldehydgehalts und/oder der intrinsischen Viskosität eine Veränderung bzw. Reduktion der Plastifizierungsdrehzahl des Extruders 23 und/oder der Zykluszeit im Extruder und/oder die Änderung der Zudosierung von Acetaldehyd-Blockern und/oder einem Scavenger. Ferner ließe sich als Prozessänderungsstrategie das Mischungsverhältnis verschiedener eingesetzter Anfangskomponenten verändern bzw. regeln, beispielsweise das Verhältnis zwischen Rezyklat, Neuware mit niedriger intrinsischer Viskosität, Neuware mit hoher intrinsischer Viskosität, Farbstabilisator, und dgl.. Ferner könnte die Prozessänderungsstrategie auch das frühzeitige Ausschleusen mangelhafter Schmelze oder mangelhafter Preforms bzw. Kunststoffbehälter umfassen, sowie das Generieren einer Warnmeldung an den Maschinenbediener bei Überschreitung vorbestimmter Schwellenwerte, was schließlich bis zum automatischen Notstopp der Anlage betrieben werden kann, falls die Minderung des gemessenen und ausgewerteten Qualitätsparameters durch diese Strategien nicht in den Griff zu bekommen ist.

Kern der Anlage A ist, wie erwähnt, der Anlagenblock B aus den beiden direkt miteinander verblockten Anlagensektionen 1 und 2 und der an der Schnittstelle 4 platzierten Messstation 9 für zumindest einen Schmelze-Qualitätsparameter. Zweckmäßig ist jedoch auch die Streckblasmaschine 12, die die Kunststoffbehälter herstellt, bei 13 mit dem Anlagenblock B verblockt, und auch der Füller 14, und gegebenenfalls sogar die Verpackungs-Anlagensektion 16, wobei die jeweiligen Verblockungsbereiche mit 13, 15 und 17 angedeutet sind. Alternativ oder additiv könnten auch die Dekontaminations-Anlagensektion 20 und die Aufbereitungs-Anlagensektion 19 sowie die Materialaufgabe-Anlagensektion 18 miteinander verblockte Teile des Anlagenblocks B sein (Verblockungen gestrichelt angedeutet bei 25, 26, 27). In oder ausgangs der Blasform-Anlagensektion 12 ist eine Aussonderungseinrichtung 24 für mangelhafte, bereits hergestellte Kunststoffbehälter vorgesehen, die dann gegebenenfalls wieder aufbereitet oder als zweite Wahl-Qualität für unkritische Lebensmittel oder andere Befüllungen verwendet werden können.

Dank der Verblockung zumindest der Anlagensektionen 1, 2 wird die in der Schmelze aus dem stromauf Prozessablauf enthaltene Wärme mit in die Preform-Herstell-Anlagensektion transferiert, was den Gesamtwärmebedarf sowie den logistischen Aufwand reduzieren hilft. Zweckmäßig wird jedoch eine Gesamtanlage geschaffen, in der viele der oder alle Anlagensektionen miteinander verblockt sind, so dass zwischen den Anlagensektionen keine Fremdeinflüsse oder unabsichtliche oder auf mangelnder Prozesskenntnis basierende Manipulationen vorgenommen werden kann, und der Anwender eine Komplettanlage zur Verfügung hat, die ihm mit automatischem Prozessablauf Endprodukte mit hoher und gleichbleibend hoher Qualität bereitstellt, gegebenenfalls bereits verpackt zum Abtransport.

## Patentansprüche

1. Anlage (A) zur kontinuierlichen Herstellung von Preforms (P) unter Verwendung von zumindest Polyester-Rezyklat zur Abfüllung spezieller Nahrungsmittel, welche Anlage (A) zumindest wenigstens eine schmelzebildende Stromauf-Anlagensektion (1), wenigstens eine die Preforms (B) erzeugende Spritzgieß-Anlagensektion (2) und eine Anlagenprozesssteuerung (CU) umfasst, **dadurch gekennzeichnet, dass** zumindest die schmelzebildende Stromauf-Anlagensektion (1) zur direkten Verarbeitung der gebildeten Schmelze zu Preforms (P) in der Spritzgieß-Anlagensektion (2) mit der Spritzgieß-Anlagensektion (2) zu einem Anlagenblock (B) verblockt ist, dass zur Ableitung und Durchführung von zumindest Prozessänderungsstrategien zwischen den verblockten Anlagesektionen (1, 2) an einer innenliegenden Schnittstelle (4) eine Inline-Messstation (9) mit einer Auswerteeinrichtung (21) für wenigstens einen im Betrieb der Anlage (A) gemessenen Qualitätsparameter der Schmelze vorgesehen ist, und dass über die Auswerteeinrichtung (21) zumindest mit positivem Auswertungsergebnis mit minderer Qualität identifizierte Schmelze aussonderbar ist.

2. Anlage nach Anspruch 1, **dadurch gekennzeichnet, dass** die Auswerteeinrichtung (21), vorzugsweise über die Anlagenprozesssteuerung (CU), verbunden ist mit einer Preformaussonderung und/oder einer Preformqualifizierungseinrichtung und/oder einer Kunststoffbehälter-Aussonderungseinrichtung (24).

3. Anlage nach Anspruch 1, **dadurch gekennzeichnet, dass** die Inline-Messstation (9) wenigstens eine Baugruppe zum Messen des Acetaldehydgehalts und/oder der intrinsischen Viskosität und/oder ausgewählter Kontaminanten und/oder der Farbe, jeweils der gebildeten Schmelze, umfasst, vorzugsweise mindestens zwei Baugruppen zum kombinierten Messen des Acetaldehydgehalts und der intrinsischen Viskosität.

4. Anlage nach Anspruch 1, **dadurch gekennzeichnet, dass** die Messstation (9) wenigstens einen mit Inertgas gespülten, von der Schmelze durchsetzten Raum aufweist, und dass in einem Abgasströmungsweg aus dem Raum wenigstens ein Gaschromatograph angeordnet ist.

5. Anlage nach Anspruch 3, **dadurch gekennzeichnet, dass** zur Messung der intrinsischen Viskosität eine Schmelze-Temperaturerfassung und eine -durchflussblende vorgesehen sind und/oder dass zur Farbmessung eine Schmelze-Durchleuchtvorrichtung vorgesehen ist, vorzugsweise mit einem nach außen aus der Messstation geführten Lichtleiter für transmittiertes Licht.

6. Anlage nach Anspruch 1, **dadurch gekennzeichnet, dass** die Stromauf-Anlagensektion (1) endseitig eine Schmelze-Filtrationseinrichtung (6) aufweist, und dass die Messstation (9) stromab der Schmelze-Filtrationseinrichtung (6) platziert ist, vorzugsweise im Bereich eines Shooting-Pots und/oder Heißkanalverteilers (22) der Spritzgieß-Anlagensektion (2).

7. Anlage nach Anspruch 1, **dadurch gekennzeichnet, dass** die Spritzgieß-Anlagensektion (2) eine Preform-Nachkühlstrecke (8) mit Kühlhülsen aufweist, und dass im Bereich der Nachkühlstrecke (8) eine Farbmessstation (9') angeordnet ist, vorzugsweise in Ausrichtung auf den Mündungsbereich jeder in einer Kühlhülse platzierten Preform (P).

8. Anlage nach wenigstens einem der vorhergehenden Ansprüche, **dadurch gekennzeichnet, dass** der Anlagenblock (B) zusätzlich wenigstens eine mit der Spritzgieß-Anlagensektion (2) verblockte Behälter-Blasform-Anlagensektion (12) und, vorzugsweise, zumindest eine mit letzterer verblockte Füller-Anlagensektion (14) umfasst, und dass, vorzugsweise, mit der Füller-Anlagensektion (14) wenigstens eine Verpackungs-Anlagensektion (16) verblockt ist und/oder dass der Anlagenblock (B) zumindest eine mit der Stromauf-Anlagensektion (1) verblockte Dekontaminations-Anlagensektion (20), eine verblockte Aufbereitungs-Anlagensektion (19) und eine verblockte Materialaufgabe-Anlagensektion umfasst.

9. Verfahren zur kontinuierlichen Herstellung von Preforms (P) für Kunststoffbehälter für die Abfüllung spezieller Nahrungsmittel unter Verwendung von zumindest Polyester-Rezyklat in einer zumindest wenigstens eine schmelzebildende Stromauf-Anlagensektion (1) und wenigstens die Preforms (P) erzeugende Spritzgieß-Anlagensektion (2) umfassenden Anlage (A), **dadurch gekennzeichnet, dass** zum direkten Verarbeiten der gebildeten Schmelze in einem unterbrechungsfreien Prozessablauf zu den Preforms (P) an einer innenliegenden Schnittstelle (4) zwischen der mit der Spritzgieß-Anlagensektion (2) verblockten Stromauf-Anlagensektion (1) und der Spritzgieß-Anlagensektion (2) während des Prozessablaufsin einer Inline-Messstation (6) wenigstens ein Qualitätsparameter der Schmelze gemessen und in einer Auswerteeinrichtung (21) ausgewertet wird, dass abhängig von der Auswertung zumindest Schmelzeaussonderungsstrategien abgeleitet werden, und dass nach Auswerten des Messresultats mit positivem, mindere Qualität der Schmelze identifizierendem Auswertungsergebnis zumindest weiterhin gebildete Schmelze ausgesondert wird.

10. Verfahren nach Anspruch 9, **dadurch gekennzeichnet, dass** nach Auswerten des Messresultats mit positivem, mindere Qualität der Schmelze identifizierendem Messresultat hergestellte Preforms (P) minderer Qualität oder aus Preforms (P) hergestellter Kunststoffbehälter minderer Qualität entweder mit Aussonderungseinrichtungen (24) ausgesondert oder hergestellte Kunststoffbehälter minderer Qualität an einer Befüllung mit den speziellen Nahrungsmitteln gehindert werden.

11. Verfahren nach Anspruch 9, **dadurch gekennzeichnet, dass** als wenigstens ein ausgewählter Schmelze-Kontaminant Alcetaldehyd über den Alcetaldehydgehalt der Schmelze gaschromatographisch gemessen wird, vorzugsweise in einer Inertgas-Schmelze-Spülströmung und/oder dass die intrinsische Viskosität der Schmelze anhand einer Temperaturdetektion und einer Schmelze-Blenden-Druckdifferenz gemessen wird und/oder dass mit Durchleuchtung der Schmelze die Farbe gemessen wird.

12. Verfahren nach Anspruch 9, **dadurch gekennzeichnet, dass** nach Auswerten des Resultats mit positivem Auswertungsergebnis, vorzugsweise bei Herausfallen des Messresultats aus einem vorbestimmten Toleranzbereich, eine Plastifizierungsdrehzahl eines Extruders (23) und/oder eine Zykluszeit und/oder eine Zudosierung eines Acetaldehyd-Blockers und/oder Scavengers in einem Regelablauf verändert wird.

## Claims

1. Plant (A) for the continuous production of preforms (P) using at least polyester recyclate for plastic containers for the filling of special foodstuffs, which plant (A) comprises at least one melt-producing upstream plant section (1) and at least one preform (P) producing injection molding plant section (2) and a plant process control system (CU), **characterized in that** at least the melt-producing upstream plant section (1) is interlocked with the injection molding plant section (2) to form a plant block (B) for the direct processing of the produced melt to preforms (P) in the injection molding plant section (2), and that, for the derivation and execution of process alteration strategies, an inline measurement station (9) including an evaluating device (21) is provided between the interlocked plant sections (1, 2) at an interior interface (4) for at least one quality parameter of the melt measured during the operation of plant (A), and that via the evaluating device (21) in case of a positive evaluation result melt identified to have inferior quality is to be discarded.

2. Plant according to claim 1, **characterized in that** the evaluating device (21) is connected, preferably via the plant process control system (CU), to a preform discarding device and/or a preform qualifying device and/or a plastic container discarding device (24).

3. Plant according to claim 1, **characterized in that** the inline measurement station (9) comprises at least one subassembly for measuring the acetaldehyde content and/or the intrinsic viscosity and/or selected contaminants and/or the color, respectively of the produced melt, preferably at least two subassemblies for the combined measurement of the acetaldehyde content and the intrinsic viscosity.

4. Plant according to claim 1, **characterized in that** the measurement station (9) comprises at least one space rinsed with inert gas and permeated by the melt, and that at least one gas chromatograph is arranged in a waste gas flow path out of the space.

5. Plant according to claim 3, **characterized in that** for measuring the intrinsic viscosity a melt temperature detection and a melt throughflow orifice, and/or that for the color measurement a melt transillumination device is provided, preferably including an optical conductor for transmitted light guided from the measurement station to the outside.

6. Plant according to claim 1, **characterized in that** the upstream plant section (1) comprises a melt filtration device (6) at an end side, and that the measurement station (9) is located downstream of the melt filtration device (6), preferably in the area of a shooting pot and/or a hot-runner distributor (22) of the injection molding plant section (2).

7. Plant according to claim 1, **characterized in that** the injection molding plant section (2) comprises a preform aftercooling zone (8) with cooling sleeves, and that a color measurement station (9') is arranged in the area of the aftercooling zone (8), preferably oriented to the mouth area of each preform (P) placed in a cooling sleeve.

8. Plant according to at least one of the preceding claims, **characterized in that** the plant block (B) additionally comprises at least one container blow molding plant section (12) interlocked with the injection molding plant section (2) and, preferably, at least one filler plant section (14) interlocked with the container blow molding plant section (12), and that, preferably, at least one packaging plant section (16) is interlocked with the filler plant section (14) and/or that the plant block (B) comprises at least one decontamination plant section (20) interlocked with the upstream plant section (1), an interlocked processing plant section (19) and an interlocked material feeding plant section.

9. Method for the continuous production of preforms (P) for plastic containers for the filling of special foodstuffs using at least polyester recyclate in a plant (A) comprising at least one melt-producing upstream plant section (1) and at least one preform-producing injection molding plant section (2), **characterized in that,** for the direct processing of the produced melt in an uninterrupted process flow to obtain the preforms (P) at an interiorly placed interface (4) between the upstream plant section (1) interlocked with the injection molding plant section (2) in an inline measurement station (6), at least one quality parameter of the melt is measured and evaluated in an evaluating device (21) and that depending on the evaluation at least process alteration strategies are derived and that after the evaluation of the measurement result with a positive evaluation result identifying inferior quality melt, at least further on produced melt is discarded.

10. Method according to claim 9, **characterized in that** after the evaluation of the measurement result with a positive evaluation result, identifying inferior quality melt preforms (P) with inferior quality or containers with inferior quality produced from preforms are either discarded by discarding devices or that produced plastic containers with inferior quality are hindered to be filled with the special foodstuffs.

11. Method according to claim 9, **characterized in that** as at least one selected melt contaminant acetaldehyde is measured by means of the acetaldehyde content of the melt with a gas-chromatographic measurement, preferably in an inert gas/melt rinse flow, and/or that the intrinsic viscosity of the melt is measured by a temperature detection and a melt orifice pressure difference, and/or the color is measured by transilluminating the melt.

12. Method according to claim 9, **characterized in that** after the evaluation of the measurement result with a positive evaluation result, preferably if the measured result falls outside a predetermined tolerance range, a plasticizing speed of an extruder (23) and/or a cycle time and/or a quantitatively controlled addition of an acetaldehyde blocker and/or scavenger are altered in a control course.

## Revendications

1. Installation (A) destinée à la fabrication en continu de préformes (P) en utilisant au moins du recyclat de polyester, en vue du conditionnement par remplissage de produits alimentaires spéciaux, l'installation (A) comprenant au minimum au moins une section d'installation amont (1) produisant un bain de matière fondue, au moins une section d'installation de moulage par injection (2) produisant les préformes (B), et une commande de processus (CU) de l'installation, **caractérisée en ce qu'**au moins la section d'installation amont (1) produisant un bain de matière fondue est, en vue de la transformation directe du bain de matière fondue produit, en préformes (P), dans la section d'installation de moulage par injection (2), abloquée à la section d'installation de moulage par injection (2) en formant un bloc d'installation (B), **en ce que** pour déduire et mettre en oeuvre au moins des stratégies de modification de processus, il est prévu entre les sections d'installation (1, 2) abloquées, au niveau d'une interface (4) située à l'intérieur, un poste de mesure in-line (9) avec un dispositif de traitement de données (21) pour au moins un paramètre de qualité du bain de matière fondue mesuré lors du fonctionnement de l'installation (A), et **en ce que** du bain de matière fondue identifié comme de moindre qualité par un résultat positif du dispositif de traitement de données (21), peut être séparé et extrait.

2. Installation selon la revendication 1, **caractérisée en ce que** le dispositif de traitement de données (21) est relié, de préférence par l'intermédiaire de la commande de processus (CU) de l'installation, à un système de séparation et d'extraction de préformes, et/ou à un dispositif de qualification de préformes, et/ou à un dispositif de séparation et d'extraction de contenants en matière plastique (24).

3. Installation selon la revendication 1, **caractérisée en ce que** le poste de mesure in-line (9) comprend au moins un sous-groupe pour mesurer la teneur d'acétaldéhyde et/ou la viscosité intrinsèque et/ou des contaminants sélectionnés et/ou la couleur, respectivement du bain de matière fondue ayant été produit, de préférence au moins deux sous-groupes pour la mesure combinée de la teneur d'acétaldéhyde et de la viscosité intrinsèque.

4. Installation selon la revendication 1, **caractérisée en ce que** le poste de mesure (9) présente au moins une chambre balayée avec un gaz inerte et traversée par le bain de matière fondue, et **en ce que** dans un chemin d'écoulement de gaz d'échappement sortant de la chambre, est agencé au moins un chromatographe pour gaz.

5. Installation selon la revendication 3, **caractérisée en ce que** pour la mesure de la viscosité intrinsèque, il est prévu un relevé de température de bain de matière fondue et un diaphragme de débit, et/ou **en ce que** pour la mesure de couleur, il est prévu un dispositif d'analyse de transmission lumineuse du bain de matière fondue, de préférence avec un guide d'onde lumineuse sortant du poste de mesure et destiné à de la lumière transmise.

6. Installation selon la revendication 1, **caractérisée en ce que** la section d'installation amont (1) comprend un dispositif de filtration de bain de matière fondue (6), et **en ce que** le poste de mesure (9) est placé en aval du dispositif de filtration de bain de matière fondue (6), de préférence dans la zone d'un pot d'injection et/ou d'un distributeur à canaux chauds (22) de la section d'installation de moulage par injection (2) .

7. Installation selon la revendication 1, **caractérisée en ce que** la section d'installation de moulage par injection (2) présente un parcours de post-refroidissement des préformes (8) avec des buses de refroidissement, et **en ce que** dans la zone du parcours de post-refroidissement (8) est agencé un poste de mesure de la couleur (9), de préférence en étant orienté vers la zone d'embouchure de chaque préforme (P) placée dans une buse de refroidissement.

8. Installation selon l'une au moins des revendications précédentes, **caractérisée en ce que** le bloc d'installation (B) comprend, en supplément, au moins une section d'installation de moulage par soufflage de contenants (12) abloquée à la section d'installation de moulage par injection (2), et à laquelle est abloquée de préférence au moins une section d'installation de remplissage (14), et **en ce que** de préférence au moins une section d'installation d'emballage (16) est abloquée à la section d'installation de remplissage (14), et/ou **en ce que** le bloc d'installation (B) comprend au moins une section d'installation de décontamination (20) abloquée à la section d'installation amont (1), une section d'installation de préparation (19) abloquée et une section d'installation d'alimentation en matériau, abloquée.

9. Procédé pour la fabrication en continu de préformes (P) pour des contenants en matière plastique pour le conditionnement par remplissage de produits alimentaires spéciaux, en utilisant au moins du recyclat de polyester, dans une installation (A) comprenant au minimum au moins une section d'installation amont (1) produisant un bain de matière fondue, et au moins la section d'installation de moulage par injection (2) produisant les préformes (B), **caractérisé en ce que** pour la transformation directe en préformes (P) du bain de matière fondue produit, selon un déroulement de processus ininterrompu, on mesure au cours du déroulement du processus, au niveau d'une interface (4) située à l'intérieur entre la section d'installation amont (1) abloquée à la section d'installation de moulage par injection (2), et la section d'installation de moulage par injection (2), dans un poste de mesure in-line (6), au moins un paramètre de qualité du bain de matière fondue, et on traite le résultat dans un dispositif de traitement de données (21), **en ce qu'**en fonction du résultat de traitement on en déduit au moins des stratégies de séparation et d'extraction du bain de matière fondue, et **en ce qu'**après le traitement du résultat de mesure, dans le cas d'un résultat de mesure positif identifiant une qualité moindre du bain de matière fondue, on sépare et extrait au moins le bain de matière fondue, qui a continué à être produit.

10. Procédé selon la revendication 9, **caractérisé en ce qu'**après traitement du résultat de mesure, dans le cas d'un résultat de mesure positif identifiant une qualité moindre du bain de matière fondue, des préformes (P) de qualité moindre fabriquées ultérieurement ou des contenants en matière plastique de qualité moindre fabriqués à partir de ces préformes (P), sont séparés et extraits à l'aide de dispositifs de séparation et d'extraction (24), ou bien l'on empêche le remplissage avec des produits alimentaires spéciaux, des contenants en matière plastique d'une qualité moindre ayant été fabriqués.

11. Procédé selon la revendication 9, **caractérisé en ce que** l'on mesure par chromatographie gazeuse, l'acétaldéhyde en tant qu'au moins un contaminant de bain de matière fondue sélectionné, par l'intermédiaire de la teneur d'acétaldéhyde du bain de matière fondue, de préférence dans un écoulement de balayage de bain de matière fondue par un gaz inerte, et/ou **en ce que** l'on mesure la viscosité intrinsèque du bain de matière fondue à l'aide d'une détection de température et d'une différence de pression du bain de matière fondue au niveau d'un diaphragme, et/ou **en ce que** l'on mesure la couleur par analyse de transmission lumineuse du bain de matière fondue.

12. Procédé selon la revendication 9, **caractérisé en ce qu'**après traitement du résultat, dans le cas d'un résultat positif, de préférence dans le cas d'une sortie du résultat de mesure hors d'une plage de tolérances prédéterminée, on fait varier une vitesse de rotation de plastification d'une extrudeuse (23) et/ou un temps de cycle et/ou une addition dosée d'un bloqueur d'acétaldéhyde et/ou de piégeurs, au cours d'une phase de régulation.
